(19) Europäisches Patentamt
European Patent Office
Office européen des brevets

(11) EP 0 732 299 A1

(12) EUROPÄISCHE PATENTANMELDUNG

(43) Veröffentlichungstag:
18.09.1996 Patentblatt 1996/38

(51) Int Cl.6: B66C 23/08, B66C 13/48

(21) Anmeldenummer: 96250032.8

(22) Anmeldetag: 08.02.1996

(84) Benannte Vertragsstaaten:
AT BE CH DE DK ES FR GB GR IE IT LI NL PT SE

(30) Priorität: 13.03.1995 DE 19509734

(71) Anmelder: MANNESMANN Aktiengesellschaft
D-40213 Düsseldorf (DE)

(72) Erfinder:
• Franzen, Hermann
D-41238 Mönchengladbach (DE)

• Kröll, Joachim
D-41363 Jüchen (DE)
• Ahmadian, Mohammad, Dr.-Ing.
D-40627 Düsseldorf (DE)

(74) Vertreter: Meissner, Peter E., Dipl.-Ing. et al
Meissner & Meissner,
Patentanwaltsbüro,
Hohenzollerndamm 89
14199 Berlin (DE)

(54) Verfahren zur Auslegerführung eines Kranes mit Wippausleger

(57)     Die Erfindung betrim ein Verfahren zur Auslegerführung eines Kranes mit Wippausleger, insbesondere eines Hafenmobilkranes beim Transportieren von Lasten zwischen zwei definierten Orten durch Schwenken und Wippen des Kranauslegers.

Erfindungsgemäß werden die Schwenk- und Wippbewegungen des Auslegers derart kombiniert und aufeinander abgestimmt, daß die Auslegerspitze innerhalb des Arbeitsbereiches des Kranes in mindestens einer die beiden Orte schneidenden senkrechten Ebene geführt wird.

Gemäß der Abhängigkeit des Wippwinkels $\alpha$ vom aktuellen Schwenkwinkel $\beta$ gilt zu jedem beliebigen Zeitpunkt für den Wippwinkel $\alpha$ die Beziehung:

$$\alpha(t) = \text{Arc cos}\left[\frac{\cos\alpha \cdot \sin\beta_0 - m \cdot \cos\alpha_0 \cdot \cos\beta_0}{\sin\beta(t) - m \cdot \cos\beta(t)}\right]$$

Fig.2

Printed by Jouve, 75001 PARIS (FR)

**Beschreibung**

Die Erfindung betrifft ein Verfahren zur Auslegerführung eines Kranes mit Wippausleger, insbesondere eines Hafenmobilkranes beim Transportieren von Lasten zwischen zwei definierten Orten durch Schwenken und Wippen des Kranauslegers.

Die Umschlagleistung eines gattungsgemäßen Kranes ist nicht nur von seiner technischen Auslegung, sondern auch davon abhängig, welcher Lastweg zum Transportieren der Last zwischen zwei definierten Orten gewählt wird und mit welcher Geschwindigkeit die Last bewegt werden kann. Die Lasttransportgeschwindigkeit wiederum ist auch abhängig von der Pendelbewegungen, die die Last während des Transportes ausführt und kann durch starkes Pendeln, insbesondere am Absetzpunkt der Last deutlich beschränkt wird. Das Lastpendeln ist infolge der Schwenk- und Wippbewegung des Kranauslegers ein mehrdimensionaler Zustand, die Größe des Lastpendelns ist durch die Schwenkgeschwindigkeit des Auslegers und dessen Lastweg bestimmt. Das Pendeln der Last belastet die Statik des Kranes und verbraucht unnötig Energie. Die Beschränkung der Umschlagleistung des Kranes stellt sich als betriebswirtschaftlicher Nachteil dar.

Ein anderes Kriterium für die Umschlagleistung eines Wippkranes ist der zurückgelegte Lastweg. Bekannte Krane mit Wippausleger bewegen die Last durch die Schwenkbewegung des Auslegers auf einem der Auslegerlänge und Neigung entsprechenden Kreisbogen, von einem Ort zum anderen. Dieser Kreisbogen stellt einen unnötigen Fahrweg dar, der wesentlich weiter als die kürzeste Verbindung zwischen den beiden Orten ist.

Aufgabe der vorliegenden Erfindung ist es, ausgehend von den beschriebenen Problemen und Nachteilen des Standes der Technik, ein Verfahren zur Auslegerführung eines Kranes mit Wippauslegern zu schaffen, mit dem die Erhöhung der Umschlagleistung eines solchen Kranes durch Optimierung des Lastweges und Minimierung der Lastpendelung erreichbar ist.

Zur Lösung der Aufgabe wird erfindungsgemäß vorgeschlagen, daß die Schwenk- und Wippbewegungen des Auslegers derartig kombiniert und aufeinander abgestimmt werden, daß die Auslegerspitze innerhalb des Arbeitsbereiches des Kranes in mindestens einer die beiden Orte schneidenden senkrechten Ebene geführt wird.

Um den zurückgelegten Weg der Last und somit die Effektivität des Kranes mit Wippausleger, insbesondere bei Hafenmobilkranen zu optimieren, wird nach dem erfindungsgemäßen Verfahren durch die Vergrößerung des Wippwinkels eine Reduzierung des durch die Last beschriebenen Radius erreicht. Durch entsprechende Abstimmung von Schwenk- und Wippbewegung soll sich im Idealfall die senkrechte Projektion der Auslegerspitze auf einer geraden Linie bewegen. Wird diese Bedingung eingehalten, so kann die Last von einem definierten Ort zu einem anderen definierten Ort bewegt werden, ohne daß ein schädliches Pendeln der Last in mehreren Dimensionen auftritt. Vielmehr wird das Lastpendeln infolge der Bewegung der Auslegerspitze auf einer senkrechten Ebene auf diese Ebene beschränkt, also auf einen eindimensionalen Bewegungszustand reduziert. Solche eindimensionalen Lastpendelungen lassen sich durch dem Kranfahrer übergeordnete Regelungen kompensieren, wie an sich bekannt.

Nach der Lehre der Erfindung ist der Drehwinkel eine zeitlich veränderliche Eingangsgröße und der Wippwinkel die daraus abgeleitete Ausgangsgröße. Der Wippwinkel läßt sich aus beliebigen Kombinationen von Ausgangs- und Zielgrößen herleiten. Es hat sich herausgestellt, daß gemäß der Abhängigkeit des Wippwinkels $\alpha$ vom aktuellen Schwenkwinkel $\beta$ zu jedem Zeitpunkt (t) für den Wippwinkel $\alpha$ die Beziehung gilt:

$$\alpha(t) = Arc\cos\left(\frac{\cos\alpha \cdot \sin\beta_0 - m \cdot \cos\alpha_0 \cdot \cos\beta_0}{\sin\beta(t) - m \cdot \cos\beta(t)}\right)$$

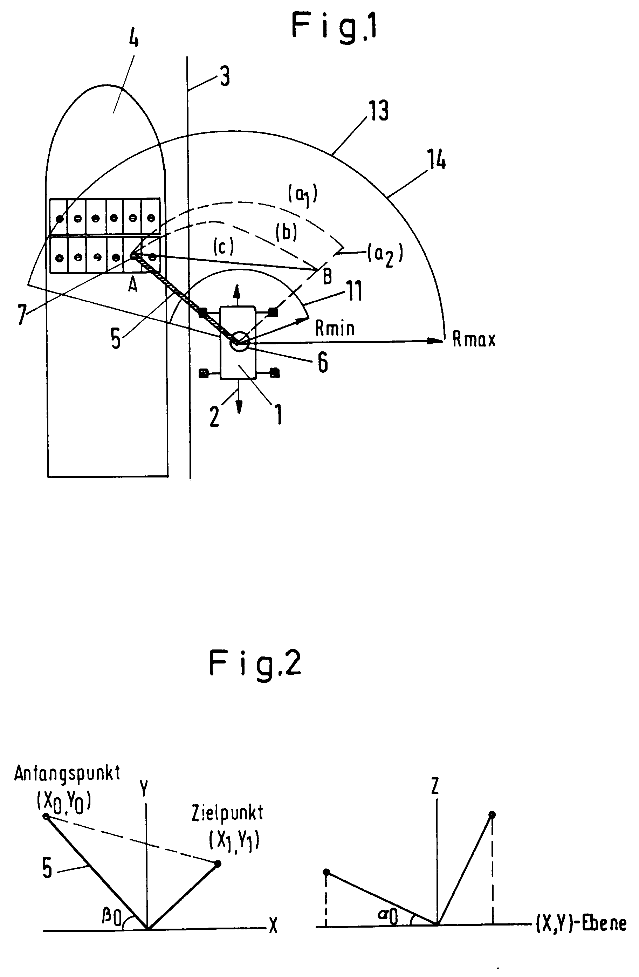

Ohne Beschränkung der Allgemeinheit sei angenommen, daß an dem Ausgangspunkt $X_0 Y_0$ der Ausleger den Wippwinkel $\alpha_0$ und den Schwenkwinkel $\beta$ hat. Der Zielpunkt sei $X_1 Y_1$ (Figur 2). Bildet man den Ausleger auf der (X, Y)-Ebene ab, ergibt sich die abgebildete Auslegerlänge zum beliebigen Zeitpunkt aus dem Produkt der Auslegerlänge und dem Cosinus des Wippwinkels.

Im Punkt $(X_0, Y_0)$ hat die Auslegerspitze bezogen auf ihren Schwenkpunkt die Koordinaten:

$$x_0 = l_A * \cos\alpha_0 * \cos\beta_0 \tag{1}$$

$$y_0 = l_A * \cos\alpha_0 * \sin\beta_0 \tag{2}$$

$l_A =$    Auslegerlänge
$\alpha_0 =$    Wippwinkel am Ausgangspunkt
$\beta_0 =$    Schwenkwinkel am Ausgangspunkt

Soll sich die Auslegerspitze auf einer senkrecht projezierten Geraden zum Punkt $(X_1, Y_1)$ bewegen, so hat die Geradengleichung bezogen auf den Drehpunkt des Auslegers folgende Form:

$$m = \frac{y_1 - y_0}{x_1 - y_1} \tag{3}$$

$$y = mx - mx_0 + y_0 \tag{4}$$

Die Koordinaten der Auslegerspitze sind zu jedem Zeitpunkt aus folgenden Gleichungen erhältlich (unter Berücksichtigung der Gleichung 1):

$$x(t) = l_A * \cos\alpha(t) * \cos\beta(t) \tag{5}$$

$$y(t) = l_A * \cos\alpha(t) * \sin\beta(t) \tag{6}$$

Die Gleichung (5) und (6) in die Gleichung (4) eingesetzt, ergibt:

$$l_A * \cos\alpha(t) \sin\beta(t) = m * l_A * \cos\alpha(t) * \cos\beta(t) - m * x_0 + y_0 \tag{7}$$

Nach einigen Umformungen und unter Einsatz der Gleichungen (2) und (3) ergibt sich die Abhängigkeit des Wippwinkels vom aktuellen Drehwinkel zu jedem beliebigen Zeitpunkt zu:

$$\cos\alpha(t) = \frac{\cos\alpha_0 \cdot \sin\beta_0 - m \cdot \cos\alpha_0 \cdot \cos\beta_0}{\sin\beta(t) - m \cdot \cos\beta(t)} \tag{8}$$

Woraus erfindungsgemäß der Wippwinkel $\alpha$ mit der Beziehung

$$\alpha(t) = Arc\cos\left( \frac{\cos\alpha \cdot \sin\beta_0 - m \cdot \cos\alpha_0 \cdot \cos\beta_0}{\sin\beta(t) - m \cdot \cos\beta(t)} \right)$$

errechnet wird. Diese Beziehung ist die notwendige und hinreichende Bedingung für eine Bewegung der Auslegerspitze in einer senkrechten Eberie bzw. auf der Geraden, die durch senkrechte Projektion der Auslegerspitze(im Gegensatz zu einer sonst rotatorischen Bewegung) ausgeführt wird.

Die Anfangs- und Zielgrößen (wippwinkel, Drehwinkel, Positionen), die bei der hier vorgestellten Berechnung als bekannt vorausgesetzt wurden, können beliebig miteinander kombiniert werden. Sie werden mit Hilfe des Sinus- und Cosinus-Satzes ineinander umgerechnet.

Solange sich die zu verbindenden Orte durch eine Gerade innerhalb des Arbeitsbereiches des Kranes verbinden lassen, wird die Auslegerspitze entlang der senkrecht durch diese Gerade verlaufenden Ebene bewegt. Sollte dies wegen der konstruktiven Beschränkung des minimalen Schwenkkreises der Auslegerspitze nicht möglich sein, so wird in der Regel der Kran verfahren, um die beiden Orte zum Aufnehmen und Absetzen der Last in den Arbeitsbereich des Kranes zu bekommen. Sollte ein Verfahren des Kranes nicht möglich sein, so können nach einem weiteren Merkmal und im Rahmen der Erfindung die Schwenk-. und Wippbewegung des Auslegers derartig kombiniert und aufeinander abgestimmt werden, daß die Auslegerspitze innerhalb des Arbeitsbereiches des Kranes in zwei winklig zueinander angeordneten senkrechten Ebenen, die jeweils einen der definierten Orte und einen Tangentenpunkt am kleinstmöglichen Schwenkkreis der Auslegerspitze schneiden, geführt und zwischen den Tangentenpunkten auf den Kreisbogen dieses kleinstmöglichen Schwenkkreises bewegt wird. Diese Fahrweise entspricht zwar nicht der optimalen Führung der Auslegerspitze auf einer Geraden, hat aber gegenüber herkömmlichen Auslegerführungen den Vorteil, daß im Zeitpunkt der Aufnahme und des Absetzens der Last die Auslegerspitze in der senkrechten Ebene verbleibt und somit der eindimensionale Lastpendelzustand erhalten wird. Gegenüber einem kreisbogenförmigen Transportweg der Last läßt sich auch durch diesen Vorschlag der Transportweg verkürzen, so daß infolge der -in den wesentlichen Phasenvermiedenen Lastpendelung größere Umschlagleistungen erreichen.

Nach einem weiteren Merkmal der Erfindung wird vorgeschlagen, den Wippwinkel $\alpha$ mittels eines Rechenwerkes zu jedem beliebigen Zeitpunkt zu berechnet und als Sollwert für die gesteuerte oder geregelte Nachführung des Wippwerkes zu verwerten.

Die vorliegende Erfindung zeichnet sich durch eine Reihe von Vorteilen aus. So ergibt sich ein betriebswirtschaftlicher Vorteil für den Kranbetreiber einerseits durch den reduzierten Energiebedarf des Kranes wie andererseits durch die Erhöhung der Umschlagleistung durch Optimierung des Lastweges und Minimierung der Lastpendelbewegung. Im Falle eines Hafenmobilkranes kann dieser wie eine Containerbrücke arbeiten, kostet jedoch ca. 1/3 weniger. Das erfindungsgemäße Verfahren ist bei allen Kranen mit Wippauslegem anwendbar, die um eine senkrechte Achse schwenkbar sind.

Die vorliegende Erfindung läßt sich am einfachsten anhand eines Ausführungsbeispiels erläutern, auf das Bezug genommen wird. Es zeigt:

Fig. 1    Die Dreh- und Wippbewegung eines gattungsgemäßen Kranes nach dem Stand der Technik und der Erfindung,

Fig. 2    die Projektion und Seitenansicht des Auslegers in den X,Y,Z-Koordinaten,

Fig. 3    die Auslegerführung bei eingeschränktem Schwenkkreis,

Fig. 4    ein Blockschaltbild der Erfindung mit einem gesteuerten Wippwerk,

Fig. 5    ein Blockschaltbild der Erfindung mit einem geregelten Wippwerk und

Fig. 6    ein Blockschaltbild der Erfindung mit einem geregelten Dreh- und Wippwerk.

In Figur 1 ist in Draufsicht grob schematisch ein erfindungsgemäßer Hafenmobilkran dargestellt, der mit 1 bezeichnet ist und in Pfeilrichtung 2 parallel zu einer Kaimauer 3 verfahrbar ist, an der ein Frachtschiff 4 festgemacht ist. Der Hafenmobilkran 1 hat einen Wippausleger 5, der auf dem Drehwerk 6 verschwenkbar und senkrecht zur Zeichnungsebene wippbar ist. Der Wippausleger 5 nimmt von dem Ort A eine Last auf und transportiert sie zum Ort B. Der Arbeitsbereich des Hafenkranes 1 wird durch den minimalen 11 und maximalen Schwenkkreis 13 der Auslegerspitze 7 definiert, deren Radien mit $R_{min}$ und $R_{max}$ angegeben sind.

Die Verfahrwege der Auslegerspitze 7 nach dem Stand der Technik sind in Figur 1 anhand der Kurven a und b dargestellt. Während für den max. Lastweg die Kurve $a_1$ ein bloßes Verschwenken des Wippauslegers 5 nach Aufnehmen der Last und $a_2$ ein abschließendes Einwippen vorsieht, wird beim Verfahrweg der Kurve b der Radius des Schwenkkreises durch Vergrößerung des Wippwinkels reduziert, so daß die Kurve b einen möglichen Weg aufzeigt, entlang dessen ein Kranführer die Last bewegen würde.

Mit der Graden c ist der optimale Weg eingezeichnet, den die Last zwischen den Orten A und B erfindungsgemäß zurücklegt. Durch kombinierte und aufeinander abgestimmte Schwenk- und Wippwinkelbewegung bewegt sich die Projektion der Auslegerspitze auf der geraden Linie c, d. h. räumlich gesehen in einer senkrecht zur Zeichnungsebene durch die Grade c verlaufenden Ebene, die die Orte A und B schneidet.

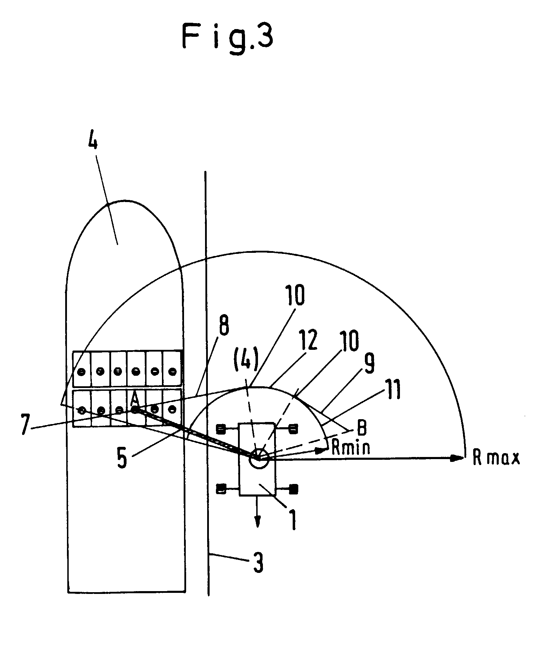

Die kombinierte und abgestimmte Schwenk- und Winkelbewegung ist berechenbar; der Drehwinkel ist eine zeitlich veränderliche Eingangsgröße und der Wippwinkel die daraus abgeleitete Ausgangsgröße. Die Anfangs- und Zielgrößen sind in Figur 2 in den Koordinaten X,Y,Z dargestellt, u.z. in der Projektion und in der Seitenansicht des Wippauslegers 5. Sie dienen dem mathematischen Ansatz der eingangs hergeleiteten Beziehung für den Wippwinkel $\alpha$ bei Bewegung der Auslegerspitze in der erfindungsgemäß definierten Ebene, die die Orte A und B schneidet. In Figur 3 ist die Situation dargestellt, bei der der Hafenmobilkran 1 in seiner Verfahrbarkeit parallel zur Kaimauer 3 bzw. zum Frachtschiff 4 beschränkt ist und deshalb der Wippausleger 5 aufgrund seines minimal möglichen Schwenkkreises daran gehindert ist, den optimalen Weg zwischen den Orten A und B auf einer projizierten Geraden bzw. in der senkrechten, die Orte A und B schneidenden Ebene zurückzulegen. In diesem Fall erfolgt die Führung der Auslegerspitze 7 in zwei im Winkel zueinander angeordneten senkrechten Ebenen 8 und 9, die jeweils einen der Orte A bzw. B sowie einen Tangentenpunkt 10 am minimalen Schwenkkreis 11 der Auslegerspitze 7 schneiden. Im Bereich zwischen den Tangentenpunkten 10 wird die Auslegerspitze auf dem Kreisbogen 12 des minimalen Schwenkkreises 11 geführt, d. h. die Auslegerspitze bewegt sich nach dem Aufnehmen der Last am Ort A und vor dem Absetzen der Last Ort B erfindungsgemäß jeweils in einer senkrechten Ebene, also im eindimensionalen Lastschwenkzustand. Dadurch können große Umschlaggeschwindigkeiten auch im Spezialfail gemäß Figur 3 erreicht werden, einerseits weil der von der Last zurückzulegende Weg verkürzt und andererseits das Lastpendeln weitgehend vermieden wird.

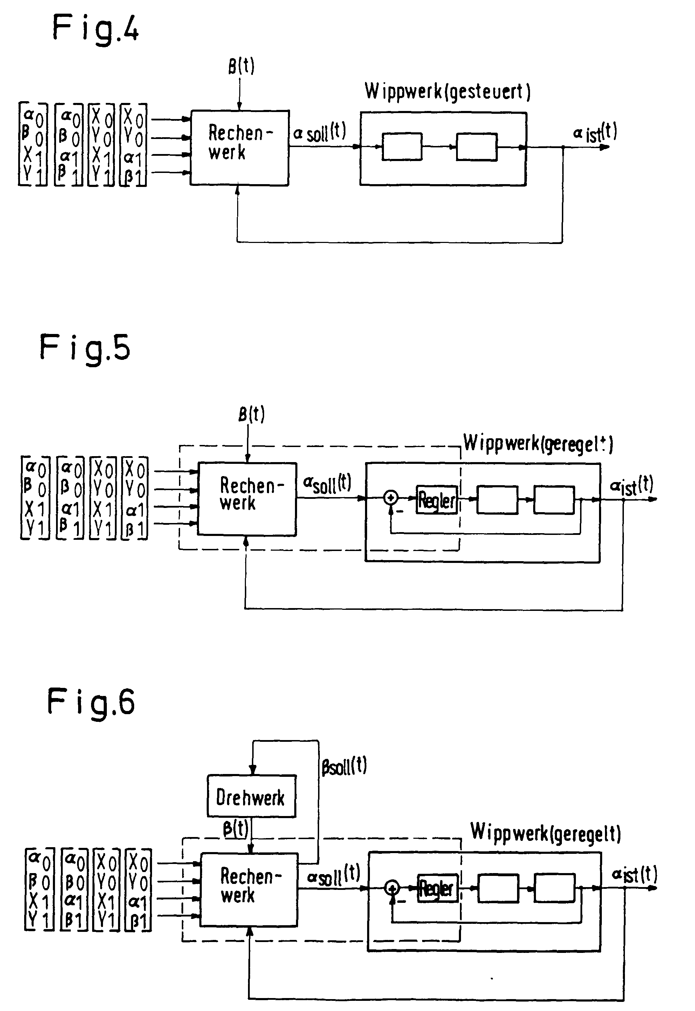

In Figur 4 ist in einem Blockschaltbild die Realisierung der Erfindung mit einem gesteuerten Wippwerk dargestellt. Im Falle des sehr genau arbeitenden Wippwerkes braucht der Wippwinkel-Istwert nicht innerhalb des Wippwerkes zurückgeführt zu werden.

Im Falle eines geregelten Wippwerks kann das Rechenwerk den Sollwert für den Wippwinkelregler vorgeben oder auch direkt die zur Regelung notwendigen Algorithmen enthalten und somit auch als Regler fungieren, wie dies,in Figur 5 in dem gestrichelt dargestellten Rechteck angedeutet ist.

Sollte das geregelte Wippwerk nicht genügend Leistung zur Verfügung haben und sich der Schleppfehler des Wippwerkes vergrößern, so soll die maximal erreichbare Drehwinkelgeschwindigkeit so begrenzt werden, daß dieser Fall nicht eintreten kann. Diese Begrenzung kann unter worst case-Bedingungen einmalig im Werk vorgenommen werden oder alternativ vom Rechenwerk zu jeder Zeit berechnet und dem Drehwerkregler als Sollwert vorgegeben werden (Figur 6).

**Patentansprüche**

1.  Verfahren zur Auslegerführung eines Kranes mit Wippausleger, insbesondere eines Hafenmobilkranes beim Transportieren von Lasten zwischen zwei definierten Orten durch Schwenken und Wippen des Kranauslegers, dadurch gekennzeichnet,
    daß die Schwenk- und Wippbewegungen des Auslegers derart kombiniert und aufeinander abgestimmt werden, daß die Auslegerspitze innerhalb des Arbeitsbereiches des Kranes in mindestens einer die beiden Orte schneidenden senkrechten Ebene geführt wird.

2.  Verfahren zur Auslegerführung eines Kranes nach Anspruch 1,
    dadurch gekennzeichnet,
    daß gemäß der Abhängigkeit des Wippwinkels $\alpha$ vom aktuellen Schwenkwinkel $\beta$ zu jedem beliebigen Zeitpunkt für den Wippwinkel $\alpha$ die Beziehung gilt:

$$\alpha(t) = Arc\cos\left(\frac{\cos\alpha \cdot \sin\beta_0 - m \cdot \cos\alpha_0 \cdot \cos\beta_0}{\sin\beta(t) - m \cdot \cos\beta(t)}\right)$$

3.  Verfahren zur Auslegerführung eines Kranes nach Anspruch 1
    dadurch gekennzeichnet,
    daß die Schwenk- und Wippbewegungen des Auslegers derart kombiniert und aufeinander abgestimmt werden, daß die Auslegerspitze innerhalb des Arbeitsbereiches des Kranes in zwei winkelig zueinander angeordneten senkrechten Ebenen, die jeweils einen der definierten Orte und einen Tangentenpunkt am kleinstmöglichen Schwenkkreis der Auslegerspitze schneiden, geführt und zwischen den Tangentenpunkten auf dem Kreisbogen dieses kleinstmöglichen Schwenkkreises bewegt wird.

4.  Verfahren zur Auslegerführung eines Kranes nach Anspruch 1 bis 3,
    dadurch gekennzeichnet,
    daß der Wippwinkel $\alpha$ mittels eines Rechenwerkes zu jedem beliebigen Zeitpunkt berechnet und als Sollwert für die gesteuerte oder geregelte Nachführung des Wippwerkes verwertet wird.

# Fig.1

# Fig.2

Anfangspunkt
$(X_0, Y_0)$

Zielpunkt
$(X_1, Y_1)$

5

$\beta_0$

X

Y

Z

$\alpha_0$

(X,Y)-Ebene

# Fig.3

# Fig.4

# Fig.5

# Fig.6

**Europäisches Patentamt**

## EUROPÄISCHER RECHERCHENBERICHT

Nummer der Anmeldung

EP 96 25 0032

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR-A-2 461 676 (CASTERAN) 6.Februar 1981 <br> * Anspruch 1 * <br> --- | 1 | B66C23/08 <br> B66C13/48 |
| A | JP-A-05 139 689 (SAITO) 8.Juni 1993 <br> * Abbildung 1 * <br> --- |  |  |
| A | JP-A-57 005 110 (MITSUBISHI) 11.Januar 1982 <br> * Abbildungen 1-4 * <br> --- | 1 |  |
| A | JP-A-61 080 304 (HITACHI) 23.April 1986 <br> * Abbildungen 1-6 * <br> --- | 1 |  |
| A | US-A-5 379 367 (JIN) 3.Januar 1995 <br> * Anspruch 1 * <br> --- | 1 |  |
| A | SHIN-ICHI YAMADA ET AL: "FUZZY CONTROL OF THE ROOF CRANE" <br> 6.November 1989 , PROCEEDINGS OF THE ANNUAL CONFERENCE OF THE INDUSTRIAL ELECTRONICS SOCIETY. (IECON), PHILADELPHIA, NOV. 6 - 10, 1989, VOL. 1 OF 4, PAGE(S) 709 - 714 , INSTITUTE OF ELECTRICAL AND ELECTRONICS ENGINEERS XP000130577 <br> --- | 1 | **RECHERCHIERTE SACHGEBIETE (Int.Cl.6)** <br><br> B66C |
| A | IEEE TRANSACTIONS ON ROBOTICS AND AUTOMATION, <br> Bd. 11, Nr. 1, 1.Februar 1995, Seiten 152-160, XP000487952 <br> SEEREERAM S ET AL: "A GLOBAL APPROACH TO PATH PLANNING FOR REDUNDANT MANIPULATORS" <br> ----- | 1 |  |

Der vorliegende Recherchenbericht wurde für alle Patentansprüche erstellt

| Recherchenort | Abschlußdatum der Recherche | Prüfer |
|---|---|---|
| DEN HAAG | 27.Juni 1996 | De Gussem, J |